# EUROPÄISCHE PATENTSCHRIFT

(11) **EP 1 306 187 B1**
(45) Veröffentlichungstag und Bekanntmachung des Hinweises auf die Patenterteilung: **18.04.2007**
(21) Anmeldenummer: 02020364.2
(22) Anmeldetag: 12.09.2002
(51) Int. Cl.: B29C 45/54

(54) **Compounder-Spritzgiessmaschine**
Compounding-Injection moulding machine
Presse à injecter avec mélangeur

(30) Priorität: 23.10.2001 DE 10152244
(43) Veröffentlichungstag der Anmeldung: 02.05.2003
(73) Patentinhaber: Krauss-Maffei Kunststofftechnik GmbH, 80997 München (DE)
(72) Erfinder: Zimmet, Rainer, 80804 München (DE); Steinherr, Thomas, 82234 Wessling (DE); Zwiesele, Jochen, 80999 München (DE)
(74) Vertreter: Zollner, Richard

(56) Entgegenhaltungen:
- EP-A- 1 013 397
- DE-A- 19 928 770
- PATENT ABSTRACTS OF JAPAN vol. 018, no. 173 (M-1581), 24. März 1994 (1994-03-24) & JP 05 337993 A (TOSHIBA MACH CO LTD), 21. Dezember 1993 (1993-12-21)
- PATENT ABSTRACTS OF JAPAN vol. 2000, no. 09, 13. Oktober 2000 (2000-10-13) & JP 2000 167896 A (TOSHIBA MACH CO LTD), 20. Juni 2000 (2000-06-20)

## Beschreibung

Die Erfindung betrifft eine Compounder-Spritzgießmaschine und ein Verfahren gemäß dem Oberbegriff der Ansprüche 1 bzw. 9.

Compounder-Spritzgießmaschinen sind allgemein bekannt. In diesem Zusammenhang wird beispielsweise auf die Dokumente DE11 42 229, WO92/00838 oder JP-Y36-19372 hingewiesen. All diesen Anlagen ist gemeinsam, dass sie kontinuierlich arbeitende Extruder umfassen, in denen ein Kunststoff-ausgangsstoff, beispielsweise Kunststoffgranulat, eingefüllt wird, um eine Kunststoff-Schmelze zu erzeugen. Der Extruder kann dabei in vielfältigster Weise ausgebildet werden, beispielsweise als Einoder Zweischneckenextruder oder als Co- oder als gegensinnig rotierender Zwei-Schnecken-Extruder. Überdies können ein oder mehrere Einfüllöffnungen zum Vermischen mehrerer Materialien vorgesehen sein.

Gemeinsam ist den Extrudern jedoch, dass sie - bei einem kontinuierlichen Betrieb der im Extruder vorgesehenen Schnecken - am Extruderausgang kontinuierlich Schmelze liefern. Dem Extruder nachgeordnet ist eine Einspritzeinrichtung, in der die vom Extruder gelieferte Schmelze in einer Einspritzkammer aufgenommen und diese mittels eines hin und her bewegbaren Kolbens in eine Einspritzform eingebracht wird.

Insbesondere zum Mischen von mehreren Materialien eignet sich die vorgeschriebene Compounder-Spritzgießanlage in besonderer Weise. Beispielsweise können Fasern, für faserverstärkte Materialien, einer Kunststoffschmelze zugegeben werden.

Um nun das prinzipbedingte Problem zu lösen, welches bei einem kontinuierlich arbeitenden Extruder, jedoch einer intermittierend arbeitenden Einspritzvorrichtung auftritt, sind bereits mehrere Lösungsansätze bekannt.

Beispielsweise ist es möglich, ein Reservoir in Form eines Zwischenspeichers vorzusehen, in dem die vom Extruder gelieferte Schmelze während der Einspritzphase der Einspritzeinrichtung aufgenommen wird. In der Befüllphase der Einspritzvorrichtung wird das Reservoir dann bei kontinuierlich weiterlaufendem Extruder wieder geleert. Eine derartige Compounder-Spritzgießmaschine ist aus der gattungsbildenden EP 1013397 A1 bekannt.

Alternativ ist es aber auch möglich, mehrere Einspritzeinrichtungen vorzusehen, auf die jeweils abwechselnd zur Befüllung umgeschaltet wird.

Problematisch bei den bisher bekannten Vorrichtungen ist jedoch eine konstante Schmelzqualität, die sich unmittelbar auf das herzustellende Material auswirkt. Die Schmelzequalität kann sich aufgrund von Druckschwankungen im oder nach dem Extruder verringern. Bisherigen Standardlösungen verwenden Staudruckmessungen über den Hydraulikdruck. Solche Druckbestimmungsmaßnahmen sind jedoch zu ungenau.

Aufgabe der vorliegenden Erfindung ist es, eine gleichbleibende Schmelzequalität sicherzustellen.

Diese Aufgabe wird alternativ durch die Merkmale der Ansprüche 1 und 9 gelöst.

Ein Kerngedanke der vorliegenden Erfindung liegt darin, den Schmelzedruck im oder nach dem Extruder zu erfassen und Maßnahmen vorzusehen, um diesen Schmelzedruck auf einen vorbestimmten Soll-Druck einzuregeln. Bei gelungener Umsetzung dieser Maßnahme kann die Schmelzequalität in hervorragender Weise gesichert werden.

Eine Ausführungsform der Erfindung beschäftigt sich damit, den Schmelzedruck zumindest in der Befüllungsphase des Einspritzzylinders auf einem vorgegebenen Wert zu halten, indem der in der Einspritzeinrichtung vorgesehene Kolben derart nach hinten verfahren wird, dass sich das gewünschte Druckniveau einstellt. Dazu ist ein aktives und geregeltes Zurückziehen des Einspritzkolbens erforderlich. Dies wird dadurch geleistet, dass ein Druckaufnehmer ein Signal an eine Steuereinrichtung abgibt und diese in Abhängigkeit von dem Drucksignal eine Regelgröße derart bestimmt, dass der Einspritzkolben gerade in der erforderlichen Weise zurückgezogen wird, um den Ist-Druck auf den Soll-Druck einzuregeln.

In der Einspritzphase kann die gerade beschriebene Maßnahme zumindest am gerade einspritzaktiven Einspritzzylinder nicht durchgeführt werden. Sind mehrere Einspritzzylinder vorgesehen, auf die alternierend umgeschaltet wird, so können die oben vorgesehenen Maßnahmen an den entsprechenden Einspritzzylindern abwechselnd vorgenommen werden.

Ist jedoch - wie im Stand der Technik ebenfalls bekannt - ein Reservoir vorhanden, so kann die Reservoirbefüllung in einer Weise vorgenommen werden, dass ebenfalls der Druck nach oder innerhalb des Extruders auf einem vorgegebenen Druckniveau gehalten wird. Dazu ist es wiederum erforderlich, einen im Reservoir befindlichen Antrieb in einer geeigneten Weise zu beaufschlagen, sodass Schmelze derart in die Reservoirkammer eingebracht wird, dass sich der Druck im oder nach dem Extruder in der gewünschten Weise einstellt.

Das im Anspruch 9 angegebene Verfahren beansprucht die Vorgehensweise, aufgrund der Abweichung zwischen Ist-Druck und Soll-Druck eine Regelgröße zu bestimmen, mit der die entsprechenden Antriebe beaufschlagt werden, um dass gewünschte Druckniveau am oder im Extruder zu erreichen.

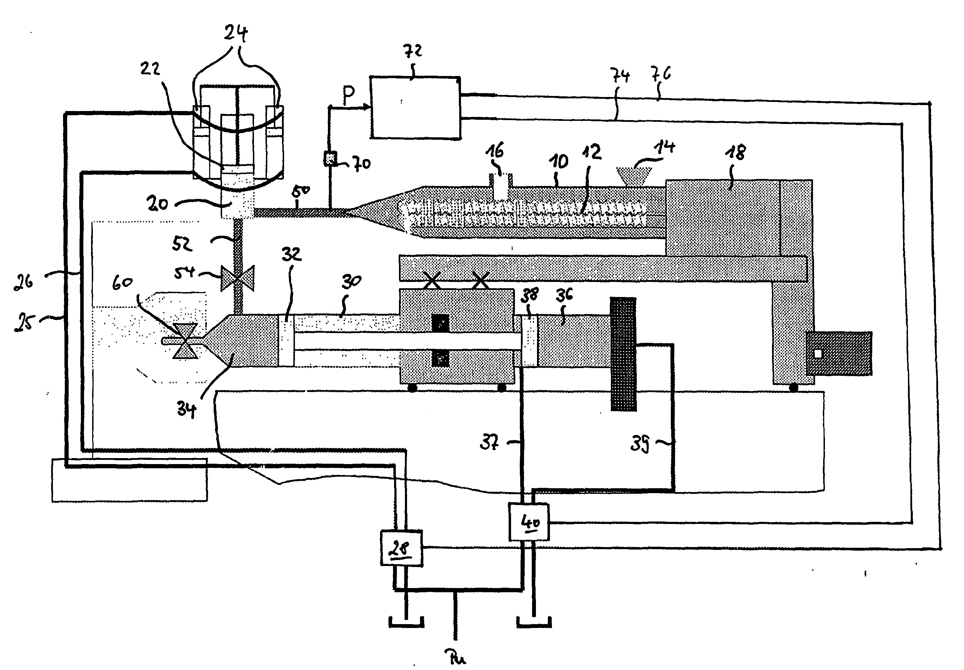

Nachfolgend wird die vorliegende Erfindung anhand einer einzigen Zeichnung näher beschrieben.

Die Zeichnung zeigt in stark schematisierter Weise eine Compounder-Spritzgießanlage. Die Compounder-Spritzgießanlage gemäß der vorliegenden Figur umfasst einen Zwei-Schnecken-Extruder 10 mit zwei gleichsinnig rotierenden Schnecken 12, die über einen nicht weiter dargestellten Antrieb drehangetrieben sind. Über Einfüllöffnungen 14 und 16 können verschiedene Materialien wie Granulate (Einfüllöffnung 14) und Fasern (Einfüllöffnung 16) in den Extruder eingebracht werden. Bei dem Extruder handelt es sich im Wesentlichen um einen handelsüblichen Extruder. Natürlich können auch andere als in der Figur dargestellte Extruderarten, z. B. Ein-Schnecken-Extruder oder gegensinnig drehende Doppel-Schnecken-Extruder verwendet werden.

Am Extruderausgang führt eine Leitung 50 zu einem Reservoir 20, in dem die vom Extruder hergestellte Schmelze zwischengespeichert werden kann. Zur Veränderung des Volumens im Reservoir 20 ist ein Kolben 22 hin und her verfahrbar. Die Verfahrbarkeit des Kolbens wird durch ein Hydrauliksystem bestimmt, welches vorliegend aus einem Regelventil 28, Hydraulikleitungen 25 und 26 und zwei parallelen Hydraulikzylindern 24 besteht. Je nach Ansteuerung des Regelventils 28 kann über die Hydraulikzylinder 24 der Reservoirzylinder 22 aktiv nach oben oder unten verfahren werden und entsprechend die im Reservoir vorhandene Schmelze ausdrücken oder Schmelze in das Reservoir 20 einbringen.

Vom Reservoir 20 führt eine weitere Leitung 52 zu einer Einspritzeinrichtung. Dabei ist in der Leitung 52 ein Ventil 54 zum Absperren angeordnet, so dass die Strömungsverbindung zwischen Reservoir 20 und Einspritzeinrichtung unterbrochen werden kann.

Die Einspritzeinrichtung umfasst vorliegend einen Einspritzzylinder 30, in dem ein Einspritzkolben 32 hin und her beweglich aufgenommen ist. Im vorderen Teil des Einspritzzylinders 30 ist eine Schmelzekammer 34 vorgesehen. Der Kolben 32 wird über eine Antriebseinrichtung beaufschlagt und kann vorliegend aktiv nach vorne verschoben aber auch nach hinten gezogen werden. Die Antriebsvorrichtung ist in Form einer Hydraulikanlage verwirklicht, und zwar mit einem weiteren Regelventil 40, einem Hydraulikzylinder 36 und einem Hydraulikkolben 38. Das Regelventil 40 ist über Hydraulikleitungen 37 und 39 mit dem Hydraulikzylinder 36 verbunden. Je nach Beaufschlagung des Kolbens 38 wird auch der Einspritzkolben 32 bewegt.

Beide Regelventile 28 und 40 sind mit einer Steuereinrichtung 72 verbunden, die ein Signal von einem Druckaufnehmer 70 erhält, welcher am Ende des Extruders angeordnet ist. Natürlich könnte der Druckaufnehmer 70 auch im vorderen Bereich des Extruder vorgesehen sein. Wichtig ist lediglich, dass das Druckniveau im Extruder bzw. am Ende des Extruders feststellbar ist.

Die gerade beschriebene Vorrichtung arbeitet nunmehr folgendermaßen: Der Extruder mit den Extruder-Schnecken 12 wird durch den Antrieb 18 kontinuierlich betrieben, wobei kontinuierlich die in den Extruder einzufüllenden Ausgangsmaterialien in entsprechender Weise dosiert zugegeben werden. Am Ende des Extruders wird eine Schmelze in Form eines kontinuierlichen Stromes ausgebracht, der über die Leitungen 50 und 52 zur Einspritzeinrichtung 30 und 32 geführt wird. Die Einspritzeinrichtung arbeitet im wesentlichen in zwei Takten, nämlich in einer Befüllungsphase und in einer Einspritzphase. In der Einspritzphase ist das Ventil 54 geschlossen, so dass der in der Einspritzeinrichtung gebildete Schmelzedruck nicht in Richtung Reservoir 20 zurückwirken kann und die Schmelze in eine nicht näher dargestellte Einspritzform verbringbar ist. Nach dem Einspritzvorgang wird das Ventil geöffnet und der Kolben 32 unter Befüllung der Einspritzeinrichtung mit Schmelze zurückverfahren (Befüllungsphase). Die vom Extruder generierte Schmelze wird während des Einspritzvorganges im Reservoir 20 zwischen gespeichert. Dazu wird der Kolben 22 zur Vergrößerung des Volumens zurückverschoben.

Um nun ein gewünschtes Druckniveau im Extruder zu erreichen, wird Schmelzedruck am Extruderausgang über einen Druckaufnehmer 70 erfasst und in Form eines Signals P an eine Steuereinrichtung 72 weitergeleitet. In der Steuereinrichtung 72 ist ein Soll-Druck abgespeichert. Der Ist-Druck P und der Soll-Druck werden miteinander verglichen und entsprechend der Druckabweichung werden Regelsignale erzeugt. Die Steuereinrichtung 72 ist mit beiden Regelventilen 28 und 40 verbunden und gibt ihre Regelsignale an diese ab.

Je nach Betriebsphase der Compounder-Spritzgießmaschine wird A) in der Einspritzphase der Kolben 32 durch entsprechende Beaufschlagung des Regelventils 40 mit der von der Steuereinrichtung 72 stammenden Regelgröße so nach hinten gezogen, dass der Ist-Druck (P) auf den Soll-Druck am Extruderausgang eingeregelt wird.

In der Einspritzphase, in der das Ventil 54 geschlossen ist, wird B) das Regelventil 28 über die von der Steuereinrichtung 72 stammende Regelgröße derart beaufschlagt, dass der Kolben 22 in einer geeigneten Weise derart zurückgezogen wird, dass ebenfalls der Ist-Druck P auf den Soll-Druck eingeregelt wird. Der Hydraulikdruck für die beiden Regelventile 28 und 40 stammt jeweils von einer entsprechenden Pumpe Pu.

Mit der o. g. Vorgehensweise kann in beiden Betriebsphasen der Compounder-Spritzgießanlage das Druckniveau am oder im Extruder in der gewünschten Weise eingeregelt werden, so dass damit auch das Ziel einer gleichbleibenden Schmelzequalität sichergestellt ist.

Natürlich können auch andere Ausführungsformen einer Compounder-Spritzgießanlage, die vorliegend nicht näher dargestellt sind, realisiert werden. Beispielsweise ist - wie oben bereits angesprochen - die Verwendung mehrerer Einspritzeinrichtungen möglich, zwischen denen zur Befüllung alternierend hin- und hergeschaltet wird. In diesem Fall würde dann in jedem Einspritzzylinder beim Befüllungsvorgang eine Regelung in der Art vorgenommen, dass wiederum der Ist-Druck (P) auf den Soll-Druck am Ende des Extruders eingeregelt werden kann.

## Patentansprüche

1. Compounder-Spritzgießmaschine umfassend
- einen Extruder (10 bis 18) zum kontinuierlichen Erzeugen einer Schmelze,
- zumindest eine Einspritzeinrichtung (30, 32), die mit dem Extruder (10 bis 18) über eine Leitung (50, 52) strömungsmäßig verbunden oder verbindbar ist und von diesem die Schmelze erhält,
- wobei in der Einspritzeinrichtung (30, 32) ein Einspritzkolben (32) mittels eines Antriebs (36, 38, 40) zur Durchführung des Einspritzvorganges nach vorne und zur Befüllung der Einspritzeinrichtung (30, 32) mit Schmelze nach hinten bewegbar ist,
- ein Reservoir (20), welches sowohl mit dem Extruder (10 bis 18) als auch mit der zumindest einen Einspritzeinrichtung (30, 32) strömungsmäßig verbunden ist, so dass bei einem kontinuierlich arbeitenden Extruder und einer intermittierend arbeitenden Einspritzeinrichtung durch das Reservoir ein Zwischenspeicher geschaffen ist,
- wobei im Reservoir (20) eine Befüllungsregeleinrichtung (22) mit einem Reservoirantrieb (24 bis 28) zum Ausdrücken der Schmelze und/oder zum vorbestimmten Befüllen des Reservoirs vorgesehen ist,
**dadurch gekennzeichnet,**
**dass** im Extruder oder zwischen dem Extruder (10 bis 18) und dem Reservoir (20) ein Druckaufnehmer (70) vorgesehen ist, der den Schmelzedruck im Extruder bzw. am Ausgang des Extruders (10 bis 18) erfasst, und dass eine Steuereinrichtung (72) zur Abgabe von Regelsignalen für den Antrieb (36, 38, 40) des Einspritzkolbens und für den Reservoirantrieb (24 bis 28) vorgesehen ist.

2. Compounder-Spritzgießmaschine nach Anspruch 1,
**dadurch gekennzeichnet,**
**dass** der Antrieb (36, 38, 40) für die Einspritzeinrichtung (30, 32) als hydraulischer Antrieb ausgebildet ist, der zumindest ein Regelventil (40) umfasst.

3. Compounder-Spritzgießmaschine nach Anspruch 1,
**dadurch gekennzeichnet,**
**dass** der Antrieb für die Einspritzeinrichtung als elektrischer Antrieb ausgebildet ist.

4. Compounder-Spritzgießmaschine nach einem der Ansprüche 1 bis 3,
**dadurch gekennzeichnet,**
**dass** der Reservoirantrieb in Form eines hin- und herbewegbaren Kolbens (22) ausgeführt ist.

5. Compounder-Spritzgießmaschine nach Anspruch 4,
**dadurch gekennzeichnet,**
der Kolben sowohl zum Ausdrücken der Schmelze in eine Richtung als auch zum Einfüllen der Schmelze in die andere Richtung hydraulisch bewegbar ist

6. Compounder-Spritzgießmaschine nach Anspruch 4,
**dadurch gekennzeichnet,**
der Kolben zum Ausdrücken der Schmelze in eine Richtung und zum Einfüllen der Schmelze in die andere Richtung elektrisch bewegbar ist.

7. Compounder-Spritzgießmaschine nach einem der Ansprüche 1 bis 6,
**dadurch gekennzeichnet,**
**dass** die Steuereinrichtung (72) derart ausgebildet ist, um den Einspritzkolben (72) in Abhängigkeit des Druckaufnehmer-Signals nach einem vorgegebenen Algorithmus zurückzuziehen.

8. Compounder-Spritzgießmaschine nach einem der Ansprüche 1 bis 7,
**dadurch gekennzeichnet,**
**dass** die Steuereinrichtung (72) derart ausgebildet ist, um den Reservoirantrieb (24 bis 28) in Abhängigkeit des Druckaufnehmer-Signals nach einem vorgegebenen Algorithmus zu regeln.

9. Verfahren zum Betrieb einer Compounder-Spritzgießmaschine nach einem der Ansprüche 1 bis 8,
**dadurch gekennzeichnet,**
**dass** der Schmelzedruck am Extruderausgang (Ist-Druck) über einen Druckaufnehmer erfasst wird, dass der ermittelte Schmelzedruck mit einem vorgegebenen Soll-Druck verglichen wird, und dass in Abhängigkeit von der Abweichung des Ist-Druckes vom Soll-Druck ein Regelsignal generiert wird, wobei beim Befüllen der Einspritzeinrichtung der Antrieb für die Einspritzeinrichtung mit dem Regelsignal derart beaufschlagt wird, dass der Ist-Druck auf den Soll-Druck einregelbar ist, und wobei beim Einspritzvorgang der Reservoirantrieb mit dem Regelsignal derart beaufschlagt wird, dass der Ist-Druck auf den Soll-Druck einregelbar ist.

## Claims

1. A compounding-injection moulding machine comprising
- an extruder (10 to 18) for the continuous production of a melt,
- at least one injection device (30, 32) which is connected or which can be connected fluidically to the extruder (10 to 18) via a line (50, 52) and receives the melt therefrom,
- wherein in the injection device (30, 32) an injection plunger (32) can be moved forwards by means of a drive (36, 38, 40) for carrying out the injection process and backwards for filling the injection device (30, 32) with melt,
- a reservoir (20) which is connected fluidically both to the extruder (10 to 18) and also to the at least one injection device (30, 32) so that in the case of a continuously operating extruder and an intermittently operating injection device, an intermediate storage device is provided by the reservoir,
- wherein a filling regulating device (22) with a reservoir drive (24 to 28) is provided in the reservoir (20) for ejecting the melt and/or for predetermined filling of the reservoir,
**characterised in that** a pressure sensor (70) is provided in the extruder or between the extruder (10 to 18) and the reservoir (20), which pressure sensor detects the melt pressure in the extruder or at the output of the extruder (10 to 18) and that a control device (72) is provided for delivering control signals for the drive (36, 38, 40) of the injection plunger and for the reservoir drive (24 to 28).

2. The compounding-injection moulding machine according to claim 1, **characterised in that** the drive (36, 38, 40) for the injection device (30, 32) is embodied as a hydraulic drive which comprises at least one regulating valve (40).

3. The compounding-injection moulding machine according to claim 1, **characterised in that** the drive for the injection device is embodied as an electric drive.

4. The compounding-injection moulding machine according to any one of claims 1 to 3, **characterised in that** the reservoir drive is designed in the form of a plunger (22) which can be moved to and fro.

5. The compounding-injection moulding machine according to claim 4, **characterised in that** the plunger can be moved hydraulically in one direction for ejecting the melt and in the other direction for filling with the melt.

6. The compounding-injection moulding machine according to claim 4, **characterised in that** the plunger can be moved electrically in one direction for ejecting the melt and in the other direction for filling with the melt.

7. The compounding-injection moulding machine according to any one of claims 1 to 6, **characterised in that** the control device (72) is designed to pull back the injection plunger (72) depending on the pressure sensor signal according to a predetermined algorithm.

8. The compounding-injection moulding machine according to any one of claims 1 to 7, **characterised in that** the control device (72) is designed to regulate the reservoir drive (24 to 28) depending on the pressure sensor signal according to a predetermined algorithm.

9. A method for operating a compounding-injection moulding machine according to any one of claims 1 to 8, **characterised in that** the melt pressure at the extruder output (actual pressure) is detected by means of a pressure sensor, the melt pressure determined is compared with a pre-determined desired pressure and a regulating signal is generated depending on the deviation of the actual pressure from the desired pressure, wherein when filling the injection device, the drive for the injection device is acted upon by the regulating signal such that the actual pressure can be adjusted to the desired pressure and wherein during the injection process, the reservoir drive is acted upon by the regulating signal such that the actual pressure can be adjusted to the desired pressure.

## Revendications

1. Presse d'injection compound, comprenant
- une extrudeuse (10 à 18) pour la production en continu d'une matière fondue,
- au moins un dispositif d'injection (30, 32) qui est relié ou qui peut être relié du point de vue de l'écoulement à l'extrudeuse (10 à 18) par une conduite (50, 52) et reçoit la matière fondue de celle-ci,
- sachant que, dans le dispositif d'injection (30, 32), un piston d'injection (32) peut être déplacé au moyen d'un entraînement (36, 38, 40), vers l'avant pour l'exécution du processus d'injection et vers l'arrière pour le remplissage du dispositif d'injection (30, 32) en matière fondue,
- un réservoir (20), lequel est relié du point de vue de l'écoulement aussi bien à l'extrudeuse (10 à 18) qu'également à l'au moins un dispositif d'injection (30, 32), de telle sorte qu'avec une extrudeuse fonctionnant en continu et un dispositif d'injection fonctionnant par intermittence, un accumulateur intermédiaire est créé par le réservoir,
- sachant que, dans le réservoir (20), il est prévu un dispositif de régulation du remplissage (22) avec un entraînement de réservoir (24 à 28) pour l'éjection de la matière fondue et/ou pour le remplissage prédéfini du réservoir,
**caractérisé en ce que**
dans l'extrudeuse ou entre l'extrudeuse (10 à 18) et le réservoir (20), il est prévu un capteur de pression (70) qui saisit la pression de la matière fondue dans l'extrudeuse, respectivement à la sortie de l'extrudeuse (10 à 18), et **en ce qu'**un dispositif de commande (72) est prévu pour l'émission de signaux de régulation pour l'entraînement (36, 38, 40) du piston d'injection et pour l'entraînement de réservoir (24 à 28).

2. Presse d'injection compound selon la revendication 1,
**caractérisée en ce que**
l'entraînement (36, 38, 40) pour le dispositif d'injection (30, 32) est configuré comme entraînement hydraulique qui comporte au moins une valve de régulation (40).

3. Presse d'injection compound selon la revendication 1,
**caractérisée en ce que**
l'entraînement pour le dispositif d'injection est configuré comme entraînement électrique.

4. Presse d'injection compound selon l'une quelconque des revendications 1 à 3, **caractérisée en ce que**
l'entraînement du réservoir est configuré sous la forme d'un piston (22) mobile dans un sens et dans l'autre.

5. Presse d'injection compound selon la revendication 4,
**caractérisée en ce que**
le piston est mobile hydrauliquement aussi bien dans un sens pour l'éjection de la matière fondue que dans l'autre sens pour le remplissage de la matière fondue.

6. Presse d'injection compound selon la revendication 4,
**caractérisée en ce que**
le piston est mobile électriquement dans un sens pour l'éjection de la matière fondue et dans l'autre sens pour le remplissage de la matière fondue.

7. Presse d'injection compound selon l'une quelconque des revendications 1 bis 6,
**caractérisée en ce que**
le dispositif de commande (72) est configuré de sorte à retirer le piston d'injection (72) en fonction du signal du capteur de pression selon un algorithme prédéfini.

8. Presse d'injection compound selon l'une quelconque des revendications 1 à 7,
**caractérisée en ce que**
le dispositif de commande (72) est configuré de sorte à réguler l'entraînement de réservoir (24 à 28) en fonction du signal du capteur de pression selon un algorithme prédéfini.

9. Procédé pour l'exploitation d'une presse d'injection compound selon l'une quelconque des revendications 1 à 8,
**caractérisé en ce que**
la pression de la matière fondue à la sortie de l'extrudeuse (pression réelle) est saisie par l'intermédiaire d'un capteur de pression, **en ce que** la pression déterminée de la matière fondue est comparée à une pression de consigne prédéfinie, et **en ce qu'**un signal de régulation est engendré en fonction de l'écart de la pression réelle d'avec la pression de consigne, sachant que, lors du remplissage du dispositif d'injection, l'entraînement pour le dispositif d'injection est soumis au signal de régulation de telle sorte que la pression réelle peut être régulée à la pression de consigne et que, lors du processus d'injection, l'entraînement du réservoir est soumis au signal de régulation de telle sorte que la pression réelle peut être régulée à la pression de consigne.
